# EUROPÄISCHE PATENTSCHRIFT

(11) **EP 3 558 791 B1**
(45) Veröffentlichungstag und Bekanntmachung des Hinweises auf die Patenterteilung: **10.03.2021**
(21) Anmeldenummer: 18701416.2
(22) Anmeldetag: 12.01.2018
(51) Int. Cl.: B62D 21/11, B62D 29/00, B60K 5/12

(54) **TRAGEKONSTRUKTION ZUM ANBRINGEN VON AGGREGATEN IM MOTORRAUM EINES FAHRZEUGS**
SUPPORT ASSEMBLY FOR MOUNTING UNITS IN THE ENGINE COMPARTMENT OF A VEHICLE
STRUCTURE DE SUPPORT POUR LA FIXATION D'ORGANES DANS LE COMPARTIMENT MOTEUR D'UN VÉHICULE.

(30) Priorität: 16.01.2017 DE 202017100198 U
(43) Veröffentlichungstag der Anmeldung: 30.10.2019
(73) Patentinhaber: Hugo Benzing GmbH & Co. KG, 70825 Korntal-Münchingen (DE)
(72) Erfinder: BENZING, Christian, 70192 Stuttgart (DE); STEINHAUER, Harry, 78052 Villingen-Schwenningen (DE)
(74) Vertreter: Fleck, Hermann-Josef
(86) Internationale Anmeldenummer: PCT/EP2018/050756
(87) Internationale Veröffentlichungsnummer: WO 2018/130652

(56) Entgegenhaltungen:
- WO-A1-2012/113433
- DE-A1-102011 012 118
- DE-A1-102011 051 259
- FR-A1- 3 037 305
- JP-A- H08 310 252
- US-A- 5 593 001

## Beschreibung

Die Erfindung bezieht sich auf eine Tragekonstruktion zum Anbringen von Aggregaten im Motorraum eines Fahrzeugs mit einer Montageelemente zum Anbringen der Aggregate und Koppelelemente zum Verbinden am Fahrzeug, insbesondere im Bereich des Motors, aufweisenden Trageeinheit, die mit Versteifungsstrukturen und Verstärkungsstreben versehen ist, welche als rippenartige Formteile ausgebildet sind.

Eine Tragekonstruktion dieser Art ist in der WO 2012/113433 A1 angegeben. Diese bekannte Tragekonstruktion weist zwei in Längsrichtung voneinander beabstandete Querträger auf, die mittels zweier seitlicher Längsträger miteinander verbunden sind.

Ähnliche Tragekonstruktionen zeigen auch die DE 10 2011 051259 A1, die DE 10 2011 012118 A1, die JP H08 31 0252 A und die FR 3 037 305 A1.

Bei einer in der US 5 593 001 A gezeigten Tragekonstruktion mit Verstärkungsstreben sind diese im Inneren der Tragekonstruktion zwischen mehreren Hohlräumen eingeformt.

Eine weitere Tragekonstruktion zum Anbringen von Aggregaten im Motorraum eines Fahrzeugs, wie Sie in der US 2007/0051 549 A1 angegeben ist, muss den besonderen Anforderungen an Stabilität und Sicherheit dieses Einsatzbereichs gerecht werden, wobei zudem auch eineungehinderte Montage und eine übersichtliche Anordnung im Bereich des Motors, beispielsweise im Einbauraum des Motors oder am Motorgehäuse, gewährleistet sein sollen. Die bekannte Tragekonstruktion für einen Elektromotor weist einen im Wesentlichen viereckigen Tragrahmen mit Seitenabschnitten und Halteelementen auf. Weiterhin ist eine Halteeinheit zum Anbringen eines Kompressors an dem Elektromotor vorhanden, die einen mit Halteflanschen versehenen Mittelteil und daran seitlich über einen Gummipuffer und Drehachsen angebrachte Seitenteile für eine vibrationsdämpfende Lagerung auf dem Gehäuse des Elektromotors aufweist.

Bei einer in der DE 10 2007 044 411 A1 gezeigten Tragekonstruktion zur Halterung eines Elektromotors in einem Fahrzeug ist mit beiden Enden eines U-förmigen Rahmens, der durch Biegen eines Rohrs hergestellt ist, ein U-förmiger Querträger verbunden.

Bei einer in der DE 10 2009 015 414 A1 gezeigten Tragekonstruktion für einen Elektromotor in einem Elektrofahrzeug werden der Elektromotor und das Getriebe rahmenartig umschlossen.

Weitere im Motorraum von Fahrzeugen angeordnete Tragestrukturen sind in der US 2012/0 247 863 A1 und der JPH08-310 252 A gezeigt.

Die bekannten Tragekonstruktionen sind jeweils mit verschiedenen spezifischen Einzelmaßnahmen an die jeweiligen Einbaugegebenheiten angepasst.

Der vorliegenden Erfindung liegt die Aufgabe zugrunde, eine Tragekonstruktion der eingangs genannten Art bereitzustellen, die gute Anpassungs- und Montagemöglichkeiten bietet, wobei die Anforderungen an Stabilität und Sicherheit vorteilhaft erfüllt werden können.

Diese Aufgabe wird durch eine Tragekonstruktion mit den Merkmalen des Anspruchs 1 gelöst. Die Trageeinheit mit den Versteifungsstrukturen und/oder Verstärkungsstreben bietet vorteilhafte Anpassungsmöglichkeiten in Verbindung mit den Montageelementen zum Anbringen der Aggregate und der Koppelelemente zum Verbinden mit dem Fahrzeug, insbesondere im Motorbereich. Dabei ergeben sich auch Vorteile für die Herstellung. Beispielsweise können an der Tragekonstruktion Aggregate für eine mobile Emissionsmessung angebracht werden.

Dabei ist in Verbindung mit der Trageplattform vorgesehen, dass die Verstärkungsstreben als rippenartige Formteile ausgebildet sind. Die Trageplattform ist als geformtes, flächiges Material ausgebildet, in das die rippenartigen Verstärkungsstreben eingeformt sind. Die Verstärkungsstreben können dabei beispielsweise mit zumindest einem Teil der Montageelemente und/oder Koppelelemente einstückig verbunden sein. Die z. B. als in der Plattform angeordnete Bohrungen ausgebildeten Montageelemente erhalten dadurch eine hohe Stabilität. Dabei ergeben sich freie Anordnungs- und Anpassungsmöglichkeiten an anzubringende Komponenten und Einbausituationen. Denkbar ist dabei auch die Anwendung der 3D-Drucktechnik, beispielsweise zur Formherstellung oder zum Ausbilden komplizierter Strukturen.

Verschiedene vorteilhafte Gestaltungsmöglichkeiten ergeben sich dadurch, dass die Versteifungsstrukturen als in einer Trageplattform der Trageeinheit räumlich dreidimensional eingeformte Strukturen und/oder als rohrförmige Streben ausgebildet sind. Durch die so ausgebildeten Versteifungsstrukturen kann der erforderlichen Stabilität und sicheren Anbringung am Motor sowie der Aggregate geeignet Rechnung getragen werden.

In diesem Zusammenhang ist vorteilhaft vorgesehen, dass sich die Verstärkungsstreben zumindest zwischen einem Teil der Montageelemente erstrecken, wobei die Verstärkungsstreben in der Trageplattform eingeformt sind.

Eine für die Herstellung und Anpassung an besondere Anforderungen weitere vorteilhafte Ausgestaltung besteht darin, dass die Trageeinheit mehrere zusammengebaute Segmente aufweist. Beispielsweise können die Segmente miteinander verschraubt, vernietet, ineinander gesteckt, verschweißt oder verlötet und/oder verklebt und so starr miteinander verbunden werden. Für die Anpassung an unterschiedliche Systeme ist dabei z. B. eine Ausbildung günstig, bei der mindestens ein Segment beibehalten und die übrigen entsprechend unterschiedlicher Einbausituationen bzw. anzubringender Aggregate angepasst werden.

Hierbei besteht eine vorteilhafte Ausführung darin, dass die Trageplattform selbst aus mehreren starr miteinander verbundenen Segmenten zusammengesetzt ist.

Eine für den Aufbau, die Fertigung und Montage vorteilhafte weitere Ausgestaltung besteht darin, dass die Segmente mindestens ein Zwischenteil und mindestens ein an diesem angebrachtes Seitenteil umfassen.

Für die Konstruktion und den Zusammenbau sind ferner die Maßnahmen von Vorteil, dass das Zwischenteil mindestens eine Anlageseite aufweist, an der ein Seitenteil mit einer angepassten Anlagegegenseite in Anlage gebracht ist und mittels Befestigungsgliedern befestigt ist, das heißt eine stabile starre Verbindung der Seitenteile mit dem Zwischenteil hergestellt ist.

Eine weitere vorteilhafte Ausgestaltung ergibt sich dabei durch die Maßnahmen, dass das Zwischenteil zwei parallel zueinander verlaufende Anlageseiten aufweist, die jeweils in einer rechtwinklig zur Anreihrichtung der Segmente erstreckten Ebene liegen.

Weitere Gestaltungsvarianten ergeben sich dadurch, dass mindestens zwei rohrförmige Streben in Anreihrichtung der Segmente verlaufen, die das mindestens eine Zwischenteil überbrücken und mit den zwei die Trageplattform seitlich begrenzenden Seitenteilen verbunden sind. Durch die rohrförmigen Streben kann dabei eine erhöhte Stabilität erreicht werden.

Eine für die Fertigung und den Einsatz im Fahrzeug weitere vorteilhafte Ausgestaltung wird dadurch erhalten, dass die Trageplattform als Aluminiumdruckgussteil ausgebildet ist, in dem die Versteifungsstrukturen, die Verstärkungsstreben, die Montageelemente und die Koppelelemente zumindest zum Teil einstückig eingeformt sind. Neben Vorteilen der Anpassbarkeit wird eine hohe Stabilität bei geringem Gewicht erreicht.

Die Erfindung wird nachfolgend anhand von Ausführungsbeispielen unter Bezugnahme auf die Zeichnungen näher erläutert. Es zeigen:
- Fig. 1: ein Ausführungsbeispiel für eine Tragekonstruktion in verschiedenen Ansichten, nämlich (in der mittleren Zeile von links nach rechts) in Draufsicht, seitlicher Ansicht von links, in Unteransicht, (in der oberen Zeile) in nach oben gedrehter Vorderansicht, perspektivischer Ansicht von schräg oben, (und in der unteren Zeile) in nach unten gedrehter Vorderansicht und in perspektivischer Ansicht von unten,
- Fig. 2: ein gegenüber Fig. 1 modifiziertes Ausführungsbeispiel für eine Tragekonstruktion mit einer Trageeinheit in perspektivischer Ansicht von schräg oben,
- Fig. 3: eine Tragekonstruktion nach Fig. 2 mit einem Zwischenteil und zwei Seitenteilen in segmentierter Ausbildung,
- Fig. 4: die beiden Seitenteile der Tragekonstruktion nach Fig. 3 in perspektivischer Ansicht von oben,
- Fig. 5: das Zwischenteil der Tragekonstruktion nach Fig. 3 in perspektivischer Ansicht von schräg unten,
- Fig. 6: das Zwischenteil mit einem daran angebauten Seitenteil der Tragekonstruktion nach Fig. 3 in perspektivischer Ansicht von schräg unten,
- Fig. 7: eine vergrößerte Darstellung des an dem Zwischenteil angebauten Seitenteils nach Fig. 6 in perspektivischer Ansicht von unten,
- Fig. 8: die Tragekonstruktion nach Fig. 3 mit Zwischenteil und den beiden Seitenteilen in perspektivischer Ansicht von unten,
- Fig. 9: die beiden Seitenteile nach Fig. 4 in perspektivischer Ansicht von schräg unten,
- Fig. 10: die beiden Seitenteile nach Fig. 9 in Verbindung mit rohrförmigen Streben in perspektivischer Ansicht von unten und
- Fig. 11: die Tragekonstruktion nach Fig. 3 mit Zwischenteil und auf beiden Seiten angebrachten Seitenteilen sowie den rohrförmigen Streben in perspektivischer Ansicht von schräg unten.

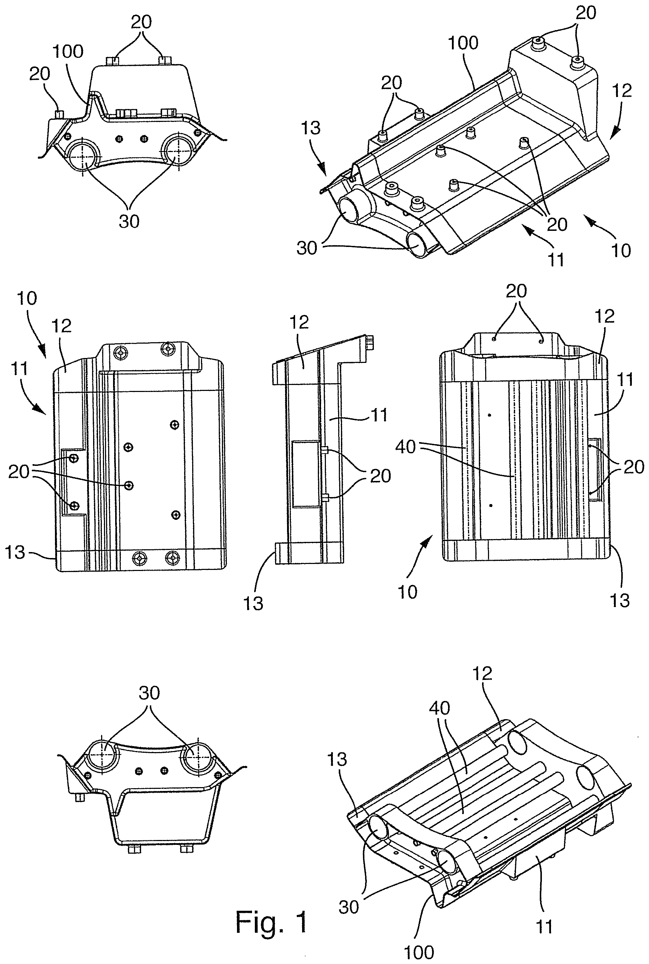

Fig. 1 zeigt in verschiedenen Ansichten eine Tragekonstruktion 1 mit einer Trageeinheit 10, die eine Vielzahl von Montageelementen 20 zum Anbringen von Aggregaten, wie beispielsweise Sensoren oder Aktuatoren oder dergleichen, sowie mehrere Koppelelemente 30 zum Anbringen im Motorraum, insbesondere am Motor eines Fahrzeugs aufweist. Die Trageeinheit 10 ist dabei als eine Art Plattform hergestellt und beispielsweise als Aluminium-Druckgussbauteil oder als Stanz-/Biegeteil ausgeführt. Zur Verstärkung weist die Trageeinheit 10 in den drei Raumrichtungen XC, YC, ZC räumlich ausgedehnte Versteifungsstrukturen 100 auf. Die Montageelemente 20 sind dabei vorteilhaft als Bohrungen ausgebildet, die in sich domartig auf Flächenbereichen der Trageplattform erhebenden Vorsprüngen eingebracht und in ihrer Positionierung auf entsprechende Verbindungselemente anzubringender Aggregate abgestimmt sind. Auch die Koppelelemente 30 sind in Position und Form auf zuzuordnende Haltestrukturen im Motorraum bzw. an einem Motorgehäuse abgestimmt. Alternativ oder zusätzlich können zwischen den anzubringenden Aggregaten und den Montageelementen 20 bzw. den Haltestrukturen im Motorraum und den Koppelelementen 30 geeignete Adapterstücke zur Anpassung für die Anbringung der Aggregate und die Verbindung im Motorraum verwendet werden. Die Montage der Aggregate bzw. die Kopplung der Tragekonstruktion 1 im Motorraum kann dabei z. B. über geeignete Dämpfungselemente wie etwa mit Gummipuffern oder dergleichen erfolgen. Die Trageeinheit 10 weist bei dem gezeigten Ausführungsbeispiel einen relativ großen, flächig eben ausgedehnten mittleren Bereich auf, an den sich einstückig nach oben in ZC-Richtung bzw. schräg dazu gerichtete Randbereiche anschließen. Die Tragekonstruktion kann allein durch die Trageeinheit 10 verkörpert sein, alternativ aber gegenüber der Trageeinheit 10 auch zusätzliche Elemente, wie Montagezubehör wie Buchsen oder Zapfen oder andere Lagerteile, umfassen.

Die in Fig. 1 gezeigte Tragekonstruktion 1, und zwar die Trageeinheit 10, weist mehrere Segmente auf, nämlich ein Zwischenteil 11 und auf zwei Seiten desselben angebrachte Segmente in Form eines ersten Seitenteils 12 und eines zweiten Seitenteils 13. Wie die Unteransicht und die perspektivische Ansicht von unten erkennen lassen, sind die beiden Seitenteile 12, 13 zusätzlich über rohrförmige Streben 40 miteinander verbunden, die das Zwischenteil 11 überbrücken.

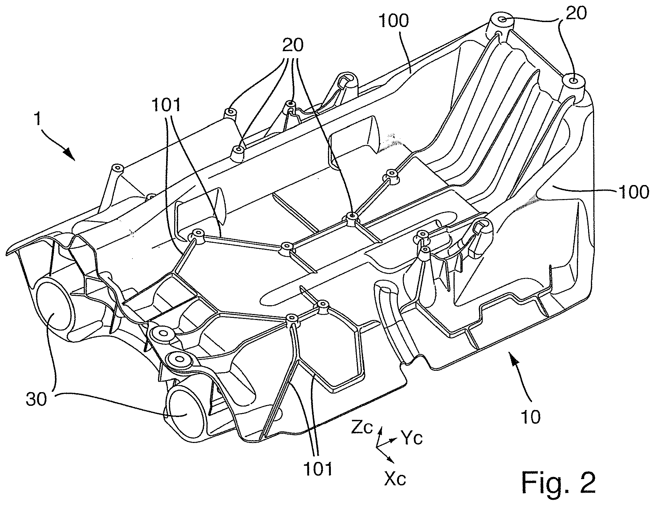

Fig. 2 zeigt ein gegenüber Fig. 1 modifiziertes Ausführungsbeispiel der Tragekonstruktion 1, insbesondere der Trageeinheit 10. Bei diesem Ausführungsbeispiel sind zusätzlich zu den Versteifungsstrukturen 100 rippenartige Verstärkungsstreben 101 eingeformt, welche unter anderem zwischen den Montageelementen 20 verlaufen und vorteilhaft mit diesen einstückig verbunden sein können, um auf der Trageplattform eine erhöhte Stabilität insbesondere in größeren ebenen Flächenbereichen derselben sowie in Übergangsbereichen zu den Versteifungsstrukturen 100 zu erreichen.

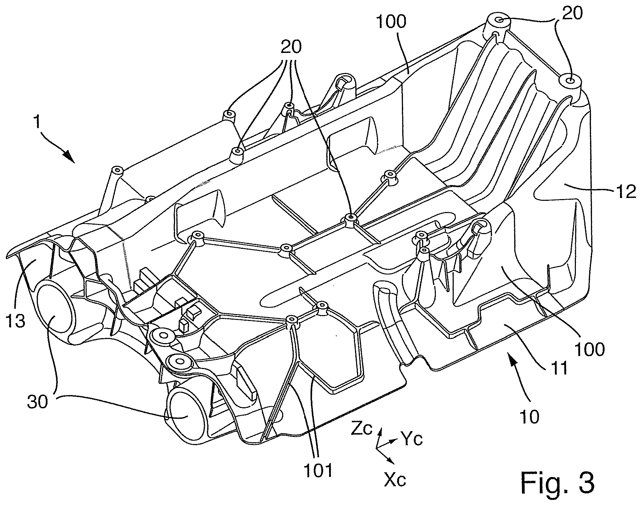

Fig. 3 zeigt die Tragekonstruktion nach Fig. 2 in segmentierter Ausgestaltung mit einem Zwischenteil 11 und auf zwei Seiten derselben angebrachten Seitenteilen, nämlich einem ersten Seitenteil 12 und einem zweiten Seitenteil 13.

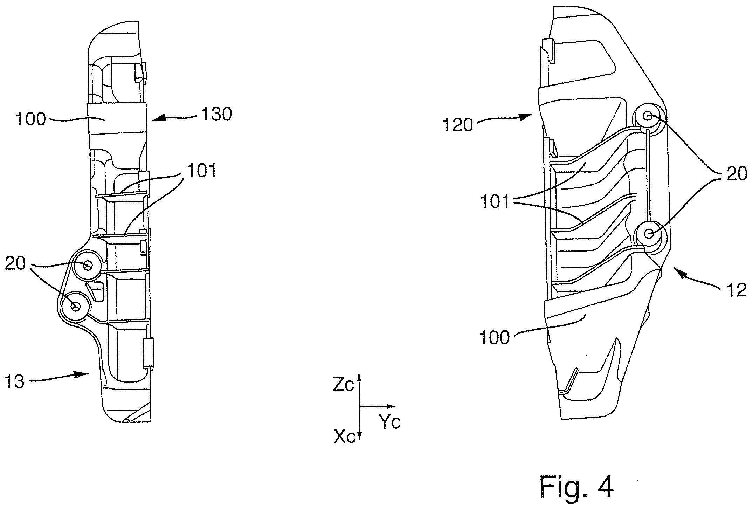

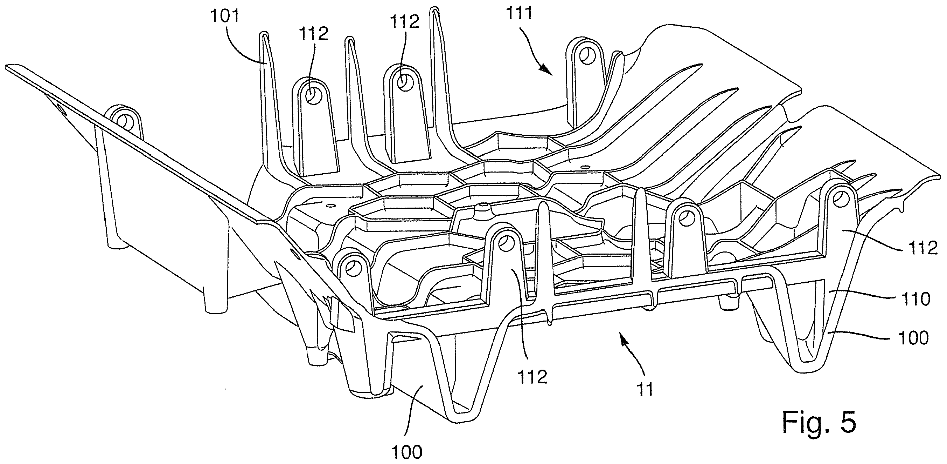

In Fig. 4 sind die beiden Seitenteile 12 und 13 nach Fig. 3 in perspektivischer Ansicht von oben separat dargestellt, während Fig. 5 das Zwischenteil 11 separat in perspektivischer Ansicht von unten zeigt. Wie aus der Fig. 5 ersichtlich, weist das Zwischenteil 11 eine erste Anlageseite 110 und eine dazu parallele zweite Anlageseite 111 auf, wobei die beiden Anlageseiten 110 und 111 in einer Ebene senkrecht und quer zu der Trageplattform (XC-/ZC-Ebene) liegen. Im Bereich der beiden Anlageseiten 110, 111 sind zudem Befestigungsglieder 112 angeordnet, die sich in ZC-Richtung erstrecken.

Das erste Seitenteil 12 weist eine erste Anlagegegenseite 120 auf, die auf die erste Anlageseite 110 des Zwischenteils 11 abgestimmt ist und an dieser in Anlage gebracht werden kann, um das erste Seitenteil 12 an dem Zwischenteil 11 über die Befestigungsglieder 112 und geeignete Befestigungselemente wie Nieten, Schrauben und/oder zusätzliche Befestigungsmittel wie z. B. Klebemittel anzubringen. Entsprechend weist das zweite Seitenteil 13 eine zweite Anlagegegenseite 130 auf, um das zweite Seitenteil 13 an der zweiten Anlageseite 111 des Zwischenteils 11 in Anlage zu bringen und an betreffenden Befestigungsgliedern 112 anzubringen. Mit diesem Aufbau kann die Trageeinheit 10 z. B. dadurch einfach variiert werden, dass die beiden Seitenteile 12, 13 mit unterschiedlichen Zwischenteilen 11 kombiniert werden können, um eine Anpassung an unterschiedliche Einbausituationen in einem Motorraum zu erhalten. Auch wäre es denkbar, ein Seitenteil oder beide Seitenteile 12, 13 zu variieren, und mit einem gleichen Zwischenteil 11 in Verbindung zu bringen. Eine andere Variationsmöglichkeit besteht darin, das Zwischenteil 11 selbst aus mehreren Segmenten zusammenzusetzen. Auf diese Weise können die Formwerkzeuge relativ einfach angepasst und aufgebaut werden, um unterschiedliche Tragekonstruktionen 1 zu realisieren. Geeignete Formen oder auch Zwischenteile 11 und Seitenteile 12, 13 mit speziellen Strukturen (wie gebogenen Kanälen, Hinterschneidungen und dergleichen) können vorteilhaft mittels 3D-Drucktechnik hergestellt werden.

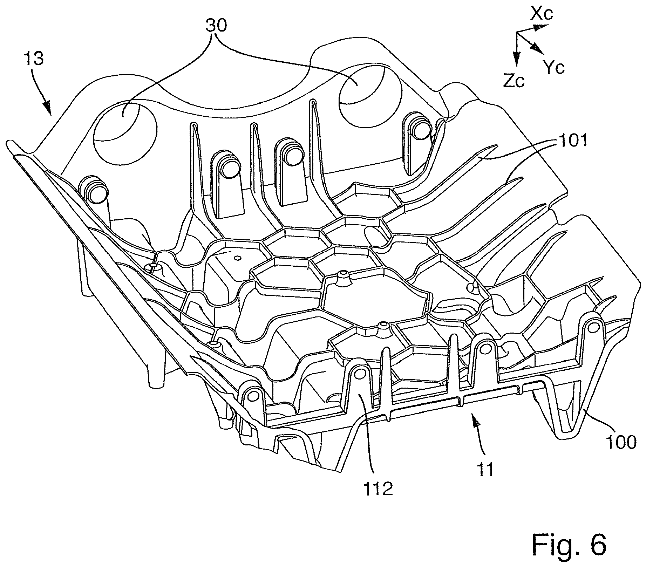

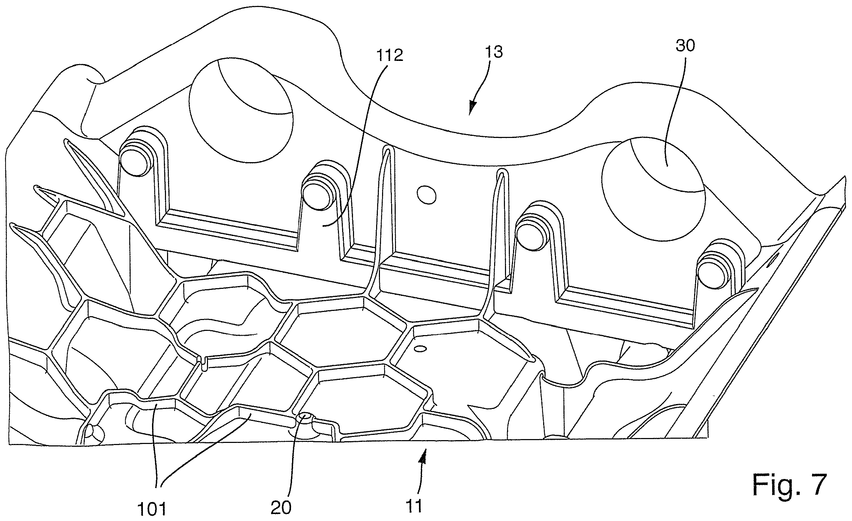

Fig. 6 zeigt eine teilweise aufgebaute Trageeinheit 10 mit dem Zwischenteil 11 und dem zweiten Seitenteil 13 in perspektivischer Ansicht von unten. Auch auf der Unterseite des Zwischenteils 11 sind Verstärkungsstreben 101 angeformt, so dass sich eine vom Gewicht her leichte Ausführung der Trageeinheit 10 mit hoher Stabilität ergibt. Fig. 7 zeigt einen vergrößerten Ausschnitt der Fig. 6. Denkbar ist auch, eine Tragestruktur mit Verstärkungsstreben 101 skelettartig als miteinander verbundene Tragerippen auszubilden.

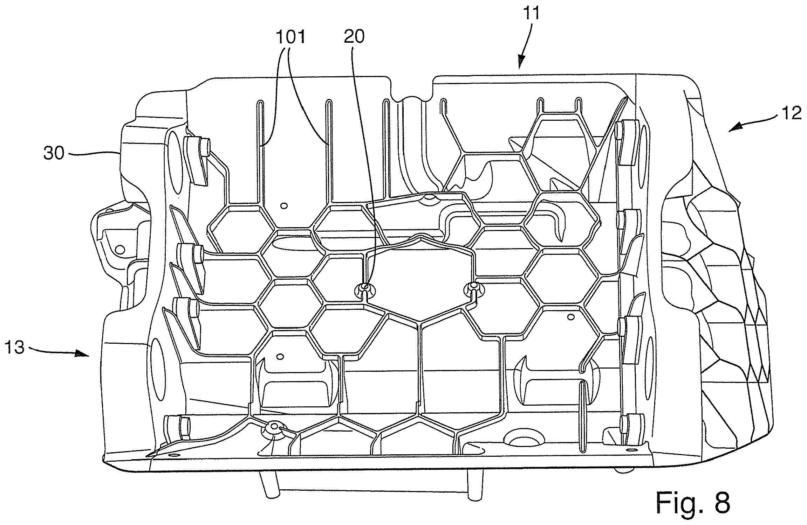

In Fig. 8 ist eine zusammengebaute Trageeinheit 10 aus Zwischenteil 11, dem ersten Seitenteil 12 und dem zweiten Seitenteil 13 in perspektivischer Ansicht von unten dargestellt.

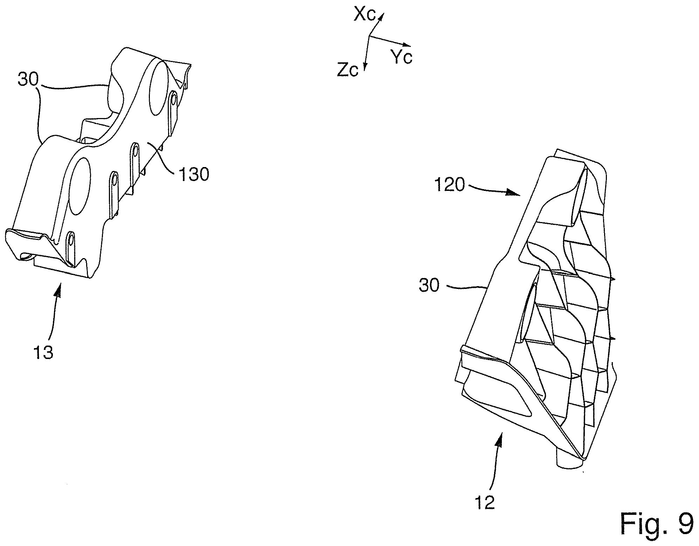

Fig. 9 zeigt die beiden Seitenteile 12 und 13 ohne Zwischenteil in perspektivischer Ansicht von unten, wobei insbesondere die zweite Anlagegegenseite des zweiten Seitenteils 13 zu erkennen ist.

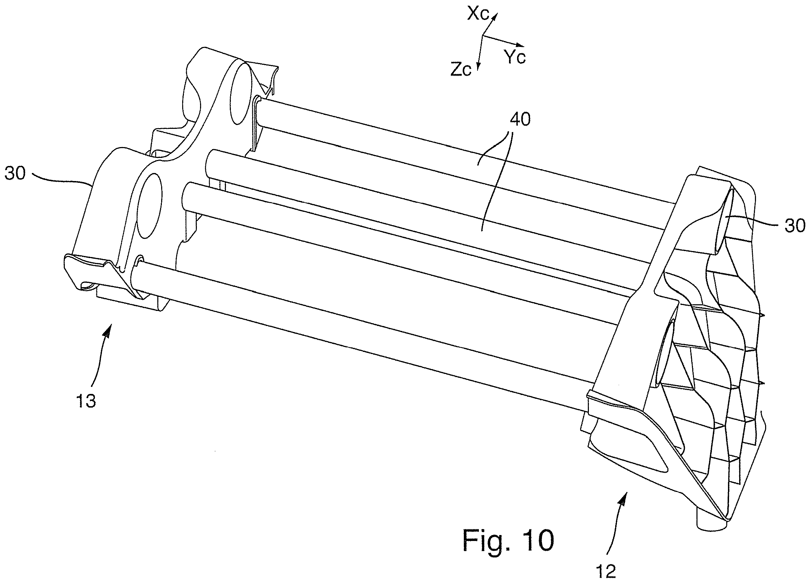

Fig. 10 zeigt die beiden Seitenteile 12 und 13 entsprechend Fig. 9, wobei die beiden Seitenteile über vier rohrförmige Streben 40 miteinander verbunden sind, in perspektivischer Ansicht von unten.

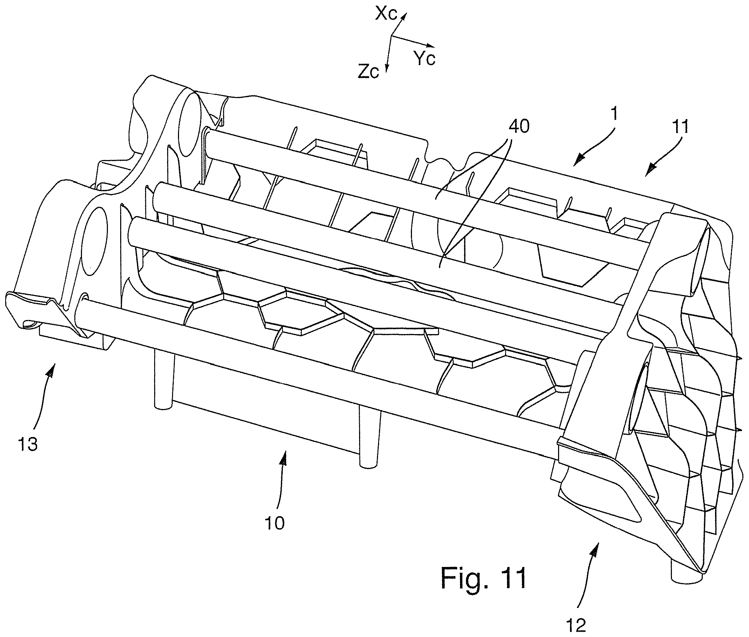

Fig. 11 zeigt die Tragekonstruktion 1 mit der Trageeinheit 10, dem Zwischenteil 11 und den beiden Seitenteilen 12, 13, welche zudem über die vier Streben 40 miteinander verbunden sind.

Denkbar ist es darüber hinaus, die Tragekonstruktion 1 mit mehreren rohrförmigen Elementen aufzubauen, welche z. B. durch Schrauben und/oder Schweißen miteinander verbunden sind und zur Aufnahme der Aggregate zusätzlich mit als Stanz/Biegeteilen ausgebildeten Haltern versehen sind. Allerdings erfordert ein derartiger Aufbau erhöhten Aufwand.

## Patentansprüche

1. Tragekonstruktion zum Anbringen von Aggregaten im Motorraum eines Fahrzeugs mit einer Montageelemente (20) zum Anbringen der Aggregate und Koppelelemente (30) zum Verbinden am Fahrzeug, insbesondere im Bereich des Motors, aufweisenden Trageeinheit (10), die mit Versteifungsstrukturen (100) und/oder Verstärkungsstreben (101) versehen ist, welche als rippenartige Formteile ausgebildet sind,
**dadurch gekennzeichnet,**
**dass** die Trageeinheit (10) eine aus geformtem, flächigem Material ausgebildete Trageplattform aufweist, in die die rippenartigen Verstärkungsstreben (101) eingeformt sind, und
**dass** die Versteifungsstrukturen (100) als in der Trageplattform der Trageeinheit (10) räumlich dreidimensional eingeformte Strukturen und/oder als rohrförmige Streben (40) ausgebildet sind.

2. Tragekonstruktion nach Anspruch 1,
**dadurch gekennzeichnet,**
**dass** sich die Verstärkungsstreben (101) zumindest zwischen einem Teil der Montageelemente (20) erstrecken.

3. Tragekonstruktion nach einem der vorhergehenden Ansprüche,
**dadurch gekennzeichnet,**
**dass** die Trageeinheit (10) mehrere zusammengebaute Segmente aufweist.

4. Tragekonstruktion nach Anspruch 3,
**dadurch gekennzeichnet,**
**dass** die Trageplattform aus mehreren Segmenten zusammengesetzt ist.

5. Tragekonstruktion nach Anspruch 4,
**dadurch gekennzeichnet,**
**dass** die Segmente mindestens ein Zwischenteil (11) und mindestens ein an diesem angebrachtes Seitenteil (12, 13) umfassen.

6. Tragekonstruktion nach Anspruch 5,
**dadurch gekennzeichnet,**
**dass** das Zwischenteil (11) mindestens eine Anlageseite (110, 111) aufweist, an der ein Seitenteil (12, 13) mit einer angepassten Anlagegegenseite (120, 13) in Anlage gebracht ist und mittels Befestigungsgliedern (112) befestigt ist.

7. Tragekonstruktion nach Anspruch 6,
**dadurch gekennzeichnet,**
**dass** das Zwischenteil (11) zwei parallel zueinander verlaufende Anlageseiten (110, 111) aufweist, die jeweils in einer rechtwinklig zur Anreihrichtung der Segmente erstreckten Ebene liegen.

8. Tragekonstruktion nach einem der Ansprüche 5 bis 7,
**dadurch gekennzeichnet,**
**dass** mindestens zwei rohrförmige Streben (40) in Anreihrichtung der Segmente verlaufen, die das mindestens eine Zwischenteil (11) überbrücken und mit den zwei die Trageplattform seitlich begrenzenden Seitenteilen (12, 13) verbunden sind.

9. Tragekonstruktion nach einem der vorhergehenden Ansprüche,
**dadurch gekennzeichnet,**
**dass** die Trageplattform als Aluminiumdruckgussteil ausgebildet ist, in dem die Versteifungsstrukturen (100), die Verstärkungsstreben (101), die Montageelemente (20) und die Koppelelemente (30) zumindest zum Teil eingeformt sind.

## Claims

1. Support structure for attaching units in the engine compartment of a vehicle, comprising a support unit (10) having mounting elements (20) for attaching the units and coupling elements (30) for connecting to the vehicle, in particular in the region of the engine, which support unit is provided with stiffening structures (100) and/or reinforcing struts (101) which are designed as rib-like molded parts, **characterized in that** the support unit (10) has a support platform which is made of flat, molded material and into which the rib-like reinforcing struts (101) are molded, and **in that** the stiffening structures (100) are designed as structures that are three-dimensionally molded in the support platform of the support unit (10) and/or as tubular struts (40).

2. Support structure according to claim 1, **characterized in that** the reinforcing struts (101) extend at least between some of the mounting elements (20).

3. Support structure according to either of the preceding claims, **characterized in that** the support unit (10) has a plurality of assembled segments.

4. Support structure according to claim 3, **characterized in that** the support platform is composed of a plurality of segments.

5. Support structure according to claim 4, **characterized in that** the segments comprise at least one intermediate part (11) and at least one side part (12, 13) attached thereto.

6. Support structure according to claim 5, **characterized in that** the intermediate part (11) has at least one abutment side (110, 111) against which a side part (12, 13) is brought into abutment by means of an adapted opposite abutment side (120, 13) and is fastened by means of fastening members (112).

7. Support structure according to claim 6, **characterized in that** the intermediate part (11) has two abutment sides (110, 111) extending in parallel with one another and each lying in a plane extending at right angles to the direction in which the segments are arranged.

8. Support structure according to any of claims 5 to 7, **characterized in that** at least two tubular struts (40) extend in the direction in which the segments are arranged, bridge the at least one intermediate part (11) and are connected to the two side parts (12, 13) laterally delimiting the support platform.

9. Support structure according to any of the preceding claims, **characterized in that** the support platform is formed as a die-cast aluminum part in which the stiffening structures (100), the reinforcing struts (101), the mounting elements (20) and the coupling elements (30) are at least partially molded.

## Revendications

1. Structure de support destinée à l'installation d'ensembles dans le compartiment moteur d'un véhicule, comportant une unité de support (10) présentant des éléments de montage (20) destinés à l'installation des ensembles et des éléments d'accouplement (30) destinés à être reliés au véhicule, en particulier dans la zone du moteur, laquelle unité de support est pourvue de structures de raidissement (100) et/ou d'entretoises de renforcement (101) qui sont conçues comme des pièces moulées en forme de nervures,
**caractérisée**
**en ce que** l'unité de support (10) présente une plate-forme de support réalisée à partir d'un matériau plat moulé, dans laquelle sont formées les entretoises de renforcement (101) en forme de nervures, et
**en ce que** les structures de raidissement (100) sont réalisées sous forme de structures formées spatialement en trois dimensions dans la plate-forme de support de l'unité de support (10) et/ou sous forme d'entretoises tubulaires (40).

2. Structure de support selon la revendication 1,
**caractérisée**
**en ce que** les entretoises de renforcement (101) s'étendent au moins entre une partie des éléments de montage (20).

3. Structure de support selon l'une des revendications précédentes,
**caractérisée**
**en ce que** l'unité de support (10) présente plusieurs segments assemblés.

4. Structure de support selon la revendication 3,
**caractérisée**
**en ce que** la plate-forme de support est composée de plusieurs segments.

5. Structure de support selon la revendication 4,
**caractérisée**
**en ce que** les segments comprennent au moins une partie intermédiaire (11) et au moins une partie latérale (12, 13) installée sur celle-ci.

6. Structure de support selon la revendication 5,
**caractérisée**
**en ce que** la partie intermédiaire (11) présente au moins un côté de contact (110, 111) sur lequel une partie latérale (12, 13) est mise en contact avec un côté opposé de contact adapté (120, 13) et est fixée au moyen d'organes de fixation (112).

7. Structure de support selon la revendication 6,
**caractérisée**
**en ce que** la partie intermédiaire (11) présente deux côtés de contact (110, 111) parallèles entre eux et situés respectivement dans un plan s'étendant à angle droit par rapport à la direction d'alignement des segments.

8. Structure de support selon l'une des revendications 5 à 7,
**caractérisée**
**en ce qu'**au moins deux entretoises tubulaires (40) s'étendent dans la direction d'alignement des segments, lesquelles entretoises s'étendent au-dessus de l'au moins une partie intermédiaire (11) et sont reliées aux deux parties latérales (12, 13) délimitant latéralement la plate-forme de support.

9. Structure de support selon l'une des revendications précédentes,
**caractérisée**
**en ce que** la plate-forme de support est réalisée sous la forme d'une pièce coulée sous pression en aluminium, dans laquelle les structures de raidissement (100), les entretoises de renforcement (101), les éléments de montage (20) et les éléments d'accouplement (30) sont au moins partiellement formés.
